# EUROPÄISCHE PATENTSCHRIFT

(11) **EP 2 396 199 B1**
(45) Veröffentlichungstag und Bekanntmachung des Hinweises auf die Patenterteilung: **14.08.2013**
(21) Anmeldenummer: 09796679.0
(22) Anmeldetag: 14.12.2009
(51) Int. Cl.: B60S 1/40, B60S 1/38

(54) **WISCHBLATT MIT EINER ADAPTEREINHEIT ZUR BEFESTIGUNG AN EINEM WISCHARM**
WIPER BLADE HAVING AN ADAPTER UNIT FOR ATTACHING TO A WIPER ARM
BALAI D'ESSUIE-GLACE MUNI D'UNE UNITE ADAPTATEUR POUR LA FIXATION SUR UN BRAS D'ESSUIE-GLACE

(30) Priorität: 13.02.2009 DE 102009000860
(43) Veröffentlichungstag der Anmeldung: 21.12.2011
(73) Patentinhaber: Robert Bosch GmbH, 70442 Stuttgart (DE)
(72) Erfinder: DEPONDT, Helmut, B-3001 Heverlee (BE)
(86) Internationale Anmeldenummer: PCT/EP2009/067031
(87) Internationale Veröffentlichungsnummer: WO 2010/091757

(56) Entgegenhaltungen:
- DE-A1-102005 060 664
- DE-A1-102006 038 828
- DE-A1-102006 047 633
- FR-A1- 2 890 026

## Beschreibung

### Stand der Technik

Die vorliegende Erfindung betrifft ein Wischblatt für einen Scheibenwischer, mit einer Wischleiste und einer Adaptereinheit zur Befestigung der Wischleiste an einem Wischarm, wobei die Adaptereinheit an einer an der Wischleiste vorgesehenen Basisanschlussvorrichtung befestigt ist.

Die WO 2008/145481 A1 beschreibt ein derartiges Wischblatt mit einer Wischleiste, an der eine mit einer Adaptereinheit verbindbare Basisanschlussvorrichtung vorgesehen ist. Die Adaptereinheit wird über eine Schnappverbindung an der Basisanschlussvorrichtung befestigt. Hierzu hat die Adaptereinheit zwei Schnappzapfen mit verbreiterten, kreisbogenförmigen Enden und die Basisanschlussvorrichtung weist zwei zugeordnete Schnapphalterungen mit elastischen Haltearmen auf, wobei jeweils zwei Haltearme mit einer kreisbogenförmigen Ausbuchtung eine Schnapphalterung ausbilden. Bei der Befestigung der Adaptereinheit an der Basisanschlussvorrichtung wird die Adaptereinheit zunächst mit einem vorderen axialen Endbereich in einem vorgegebenen Winkel an der Basisanschlussvorrichtung eingefädelt und dann mit ihrem hinteren axialen Endbereich in Richtung der Basisanschlussvorrichtung gedreht, bis die Schnappzapfen gegen die Schnapphalterungen anliegen. Dann werden die Schnappzapfen gegen die zugeordneten Schnapphalterungen gedrückt, wobei die kreisbogenförmigen Enden der Schnappzapfen die elastischen Haltearme der zugeordneten Schnapphalterung zunächst auseinander biegen, um dann in die entsprechenden kreisbogenförmigen Ausbuchtungen einzugreifen. Hierbei federn die Haltearme in ihre Ausgangslage zurück und umschließen die in die kreisbogenförmigen Ausbuchtungen eingreifenden kreisbogenförmigen Enden der Schnappzapfen. Nachteilig am Stand der Technik ist, dass zur Befestigung der Adaptereinheit an der Basisanschlussvorrichtung des Wischblatts eine Kombination unterschiedlicher Bewegungsabläufe erforderlich ist, d.h. zunächst ein Einfädeln unter einem vorgegebenen Winkel, dann eine Drehbewegung und abschließend eine etwa lineare Bewegung unter Aufwendung eines vorgegebenen Drucks. Somit ist die Handhabung der Adaptereinheit schwierig und die Montage des Wischblatts ist aufwändig und kompliziert. Darüber hinaus ist, z.B. bei einem Verkanten der Adaptereinheit an der Basisanschlussvorrichtung, durch den bei der linearen Bewegung auszuübenden Druck eine Beschädigung oder Zerstörung einzelner Bauteile der Schnappverbindung möglich.

### Offenbarung der Erfindung

Eine Aufgabe der Erfindung ist es daher, ein neues Wischblatt für einen Scheibenwischer bereit zu stellen, mit einer Adaptereinheit, die einfach zu handhaben ist und schnell und sicher an einer Basisanschlussvorrichtung, die an einer Wischleiste vorgesehen ist, befestigbar ist.

Dieses Problem wird gelöst durch ein Wischblatt für einen Scheibenwischer, mit einer Wischleiste und einer Adaptereinheit zur Befestigung der Wischleiste an einem Wischarm. Die Adaptereinheit ist an einer an der Wischleiste vorgesehenen Basisanschlussvorrichtung befestigt. Die Adaptereinheit weist einen ersten Adapterhalter und einen zweiten Adapterhalter auf, die voneinander beabstandet an der Basisanschlussvorrichtung befestigt sind und einander zugewandte Rastglieder aufweisen, an denen ein der Adaptereinheit zugeordnetes Verbindungselement zur Verbindung mit dem Wischarm verrastet ist.

Die Erfindung ermöglicht somit die Bereitstellung eines Wischblatts mit einer auf einfache Art und Weise montierbaren Adaptereinheit, die sicher und stabil am Wischblatt befestigbar ist.

Gemäß einer Ausführungsform sind der erste und zweite Adapterhalter dauerhaft an der Basisanschlussvorrichtung verrastet. Das Verbindungselement ist lösbar an dem ersten und zweiten Adapterhalter verrastet.

Somit kann ein Verbindungselement bereit gestellt werden, dass sicher mit dem ersten und zweiten Adapterhalter verbindbar ist und einfach wieder von diesen trennbar ist.

Das Verbindungselement weist bevorzugt Gegenrastglieder auf, die mit den Rastgliedern der Adapterhalter verrastet sind. Die Gegenrastglieder sind vorzugsweise betätigbar, um ein Lösen einer zwischen Gegenrastgliedern und Rastgliedern vorliegenden Verrastung zu ermöglichen.

Somit kann ein einfach aufgebautes, kostengünstiges Verbindungselement bereitgestellt werden.

Gemäß einer Ausführungsform weisen die Rastglieder dem Verbindungselement zugewandte Vorsprünge auf, und die Gegenrastglieder weisen federnde Rastzungen auf, die an den Vorsprüngen verrastet sind.

Die Erfindung ermöglicht somit die Bereitstellung einer Adaptereinheit mit einem einfachen und unkomplizierten Aufbau.

Bevorzugt ist in axialer Richtung der Wischleiste zwischen dem ersten und zweiten Adapterhalter ein Abstand vorgesehen, der im Wesentlichen einer Längserstreckung des Verbindungselements entspricht.

Somit kann das Verbindungselement auf einfache Art und Weise zwischen dem ersten und zweiten Adapterhalter angeordnet werden, wobei bei entsprechender Ausgestaltung der Adapterhalter und des Verbindungselements eine formschlüssige Verbindung zwischen den Adapterhaltern und dem Verbindungselement hergestellt werden kann.

Der erste und zweite Adapterhalter weisen bevorzugt zumindest abschnittsweise eine Längsnut zur Aufnahme von der Basisanschlussvorrichtung zugewandten Endbereichen eines an der Wischleiste vorgesehenen Spoilers auf.

Somit kann eine optisch ansprechende Verbindung zwischen den Adapterhaltern und der Wischleiste erreicht werden.

Das Verbindungselement weist vorzugsweise ein Lagerelement auf, an dem ein dem Wischarm zugeordnetes Anschlussglied lagerbar ist.

Somit kann das Wischblatt einfach und sicher an einem entsprechenden Wischarm befestigt werden.

Gemäß einer Ausführungsform ist die Wischleiste mit der daran vorgesehenen Basisanschlussvorrichtung gelenkfrei ausgebildet, wobei die Basisanschlussvorrichtung an der Wischleiste vormontiert ist.

Die Erfindung ermöglicht somit die Bereitstellung eines Wischblatts, bei der die Adaptereinheit einfach und schnell an der vormontierten Basisanschlussvorrichtung befestigt werden kann.

Das Eingangs genannte Problem wird auch gelöst durch eine Adaptereinheit zur Befestigung einer einem Wischblatt für einen Scheibenwischer zugeordneten Wischleiste an einem Wischarm, wobei die Adaptereinheit an einer an der Wischleiste vorgesehenen Basisanschlussvorrichtung befestigbar ist, dadurch gekennzeichnet, dass ein erster Adapterhalter und ein zweiter Adapterhalter vorgesehen sind, die voneinander beabstandet an der Basisanschlussvorrichtung befestigbar sind und Rastglieder aufweisen, an denen ein zwischen dem ersten und zweiten Adapterhalter montierbares Verbindungselement zur Verbindung mit dem Wischarm verrastbar ist.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine Seitenansicht eines Wischblatts mit einer Wischleiste, an der eine Basisanschlussvorrichtung befestigt ist, und einer Adaptereinheit gemäß der Erfindung,
Fig. 2 eine perspektivische Ansicht eines Ausschnitts II von Fig. 1, mit der mit der Basisanschlussvorrichtung versehenen Wischleiste von Fig. 1 und der Adaptereinheit gemäß einer Ausführungsform im unmontierten Zustand,
Fig. 3 eine perspektivische Ansicht der Wischleiste von Fig. 2, bei der Montage der Adapterhalter von Fig. 2,
Fig. 4 eine perspektivische Ansicht der Wischleiste von Fig. 2 mit montierten Adapterhaltern, bei der Montage des Verbindungselements von Fig. 2, und
Fig. 5 eine perspektivische Ansicht der Wischleiste von Fig. 4 mit den montierten Adapterhaltern, bei der Verrastung des Verbindungselements von Fig. 2 an den Adapterhaltern.

### Beschreibung der Ausführungsbeispiele

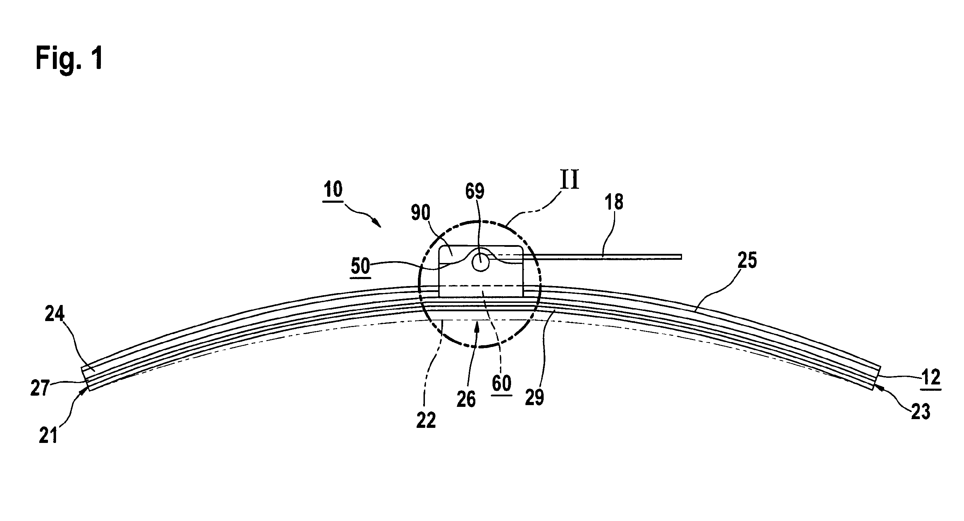

Fig. 1 zeigt ein Wischblatt 10 mit einer Wischleiste 12, die eine über einen Kippsteg 27 mit einer Rückenleiste 24 verbundene Wischlippe 29 aufweist. An der Rückenleiste 24 ist ein Spoiler 25 vorgesehen. An der Wischleiste 12 ist eine Basisanschlussvorrichtung 60 vorgesehen, an der eine Adaptereinheit 50 zum Anschließen eines an einem Wischarm 18 vorgesehenen Anschlussglieds 90 befestigt ist. Das Anschlussglied 90 ist beispielhaft über einen Gelenkbolzen 69 an der Adaptereinheit 50 angeschlossen. Mit Hilfe des Wischarms 18 kann das Wischblatt 10 zum Wischen über eine strichpunktiert dargestellte Scheibe 22, z.B. eine Kraftfahrzeugscheibe, geführt werden.

Gemäß einer Ausführungsform ist das Wischblatt 10 in Flachbalkenbauweise ausgebildet, d.h. die Wischleiste 12 weist seitliche Längsnuten auf, in denen zwei Tragschienen, vorzugsweise Federschienen, angeordnet sind. Alternativ hierzu kann die Wischleiste 12 als Hohlprofil mit einem etwa zentralen Längskanal ausgebildet sein, in dem eine einzelne Tragschiene angeordnet ist. Die Wischleiste 12 mit der daran vorgesehenen Basisanschlussvorrichtung 60 ist bevorzugt gelenkfrei ausgebildet, wobei die Basisanschlussvorrichtung 60 vorzugsweise an der Wischleiste 12 vormontiert ist.

In Fig. 1 ist das Wischblatt 10 noch nicht vollständig auf die Scheibe 22 aufgesetzt, es liegen nur dessen axiale Wischblattenden 21, 23 an der Scheibe 22 an, während die Wischleiste 12 in Wischblattmitte 26, d.h. etwa im Bereich der Adaptereinheit 50, noch von der Scheibe 22 beabstandet ist. Wird über den Wischarm 18 eine vorgesehene Anpresskraft auf das Anschlussglied 90 und somit die Adaptereinheit 50 ausgeübt, legt sich die Wischleiste 12 an der Scheibe 22 an. Hierbei wird ein gleichmäßiger Anpressdruck über die gesamte Wischblattlänge erreicht, auch wenn sich die Scheibenkrümmung im Verlauf der Wischbewegung ändert.

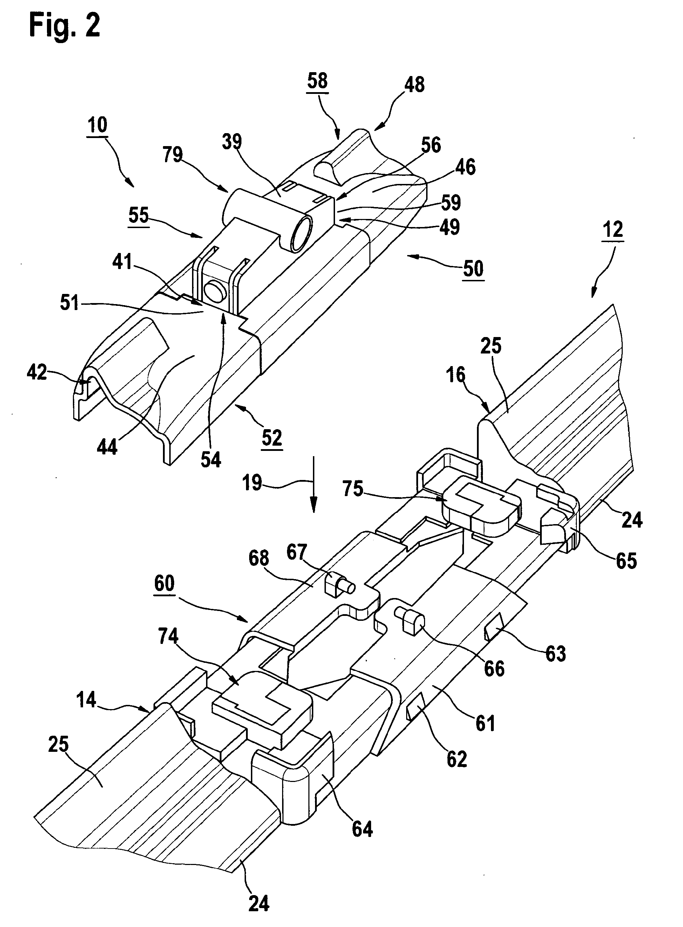

Fig. 2 zeigt einen in Fig. 1 mit II gekennzeichneten Ausschnitt des Wischblatts 10 mit der Wischleiste 12 und der Adaptereinheit 50 gemäß einer Ausführungsform. Die Adaptereinheit 50 ist zur Herstellung des Wischblatts 10 von Fig. 1 in Richtung eines Pfeils 19 an der mit der Basisanschlussvorrichtung 60 versehenen Wischleiste 12 zu befestigen.

Wie aus Fig. 2 ersichtlich, weist der an der Rückenleiste 24 der Wischleiste 12 vorgesehene Spoiler 25 im Bereich der Basisanschlussvorrichtung 60 eine Unterbrechung auf, mit einem ersten, der Basisanschlussvorrichtung 60 zugewandten Endbereich 14 und einem zweiten, der Basisanschlussvorrichtung 60 zugewandten Endbereich 16. Die Basisanschlussvorrichtung 60 besteht beispielhaft aus einer ersten Anschlussschiene 61 und einer zweiten Anschlussschiene 68.

Die Anschlussschiene 61 weist beispielhaft zwei laterale Positionierglieder 62, 63 und ein der Adaptereinheit 50 zugewandtes Positionierglied 66 auf. An axialen Endbereichen der Schiene 61 sind Schultern 64 bzw. 65 ausgebildet. Die Anschlussschiene 68 ist ähnlich aufgebaut und weist somit entsprechende Positionierglieder und an axialen Endbereichen ausgebildete Schultern auf. In Fig. 2 ist jedoch nur ein der Adaptereinheit 50 zugewandtes Positionierglied 67 sichtbar.

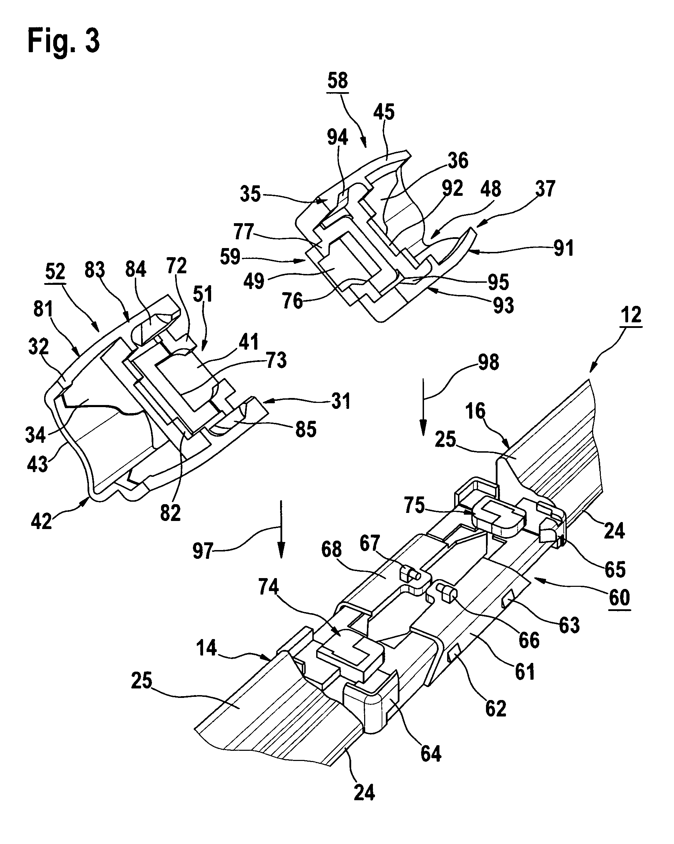

Die Anschlussschienen 61, 68 umgreifen zumindest abschnittsweise die Rückenleiste 24 der Wischleiste 12 und sind vorzugsweise fest aneinander und somit an der Rückenleiste 24 verankert, z.B. dauerhaft verrastet, wobei ein erstes und ein zweites, säulenartiges Fixierglied 74, 75 ausgebildet werden. Zur dauerhaften Verrastung weisen die Schienen 61, 68 bevorzugt geeignete Rast- bzw. Gegenrastmittel auf. Es wird jedoch darauf hingewiesen, dass die Verankerung der Schienen 61, 68 aneinander auch mit anderen, äquivalenten Mitteln erreichbar ist, z.B. mit Schnapp- oder Klemmverbindungen. Deshalb ist die vorliegende Erfindung nicht auf die Verwendung von Rast- und Gegenrastmitteln beschränkt. Die Adaptereinheit 50 ist z.B. aus Kunststoff hergestellt und weist bevorzugt einen ersten Adapterhalter 52, ein Verbindungselement 55 und einen zweiten Adapterhalter 58 auf, deren Oberseiten 44, 39 bzw. 46 in Fig. 2 gezeigt sind. Der erste Adapterhalter 52 weist ein erstes Rastglied 51 mit einem an der Oberseite 44 des Halters 52 ausgebildeten Vorsprung 41 auf. Zur Aufnahme des der Basisanschlussvorrichtung 60 zugewandten Endbereichs 14 des Spoilers 25 ist an dem ersten Adapterhalter 52 zumindest in einem vorgegebenen Bereich, wie unten bei Fig. 3 beschrieben, eine Längsnut 42 ausgebildet. Analog hierzu weist der zweite Adapterhalter 58 ein zweites Rastglied 59 mit einem an der Oberseite 46 des Halters 58 ausgebildeten Vorsprung 49 auf. Zur Aufnahme des der Basisanschlussvorrichtung 60 zugewandten Endbereichs 16 des Spoilers 25 ist an dem zweiten Adapterhalter 58 zumindest in einem vorgegebenen Bereich, wie unten bei Fig. 3 beschrieben, eine Längsnut 48 ausgebildet.

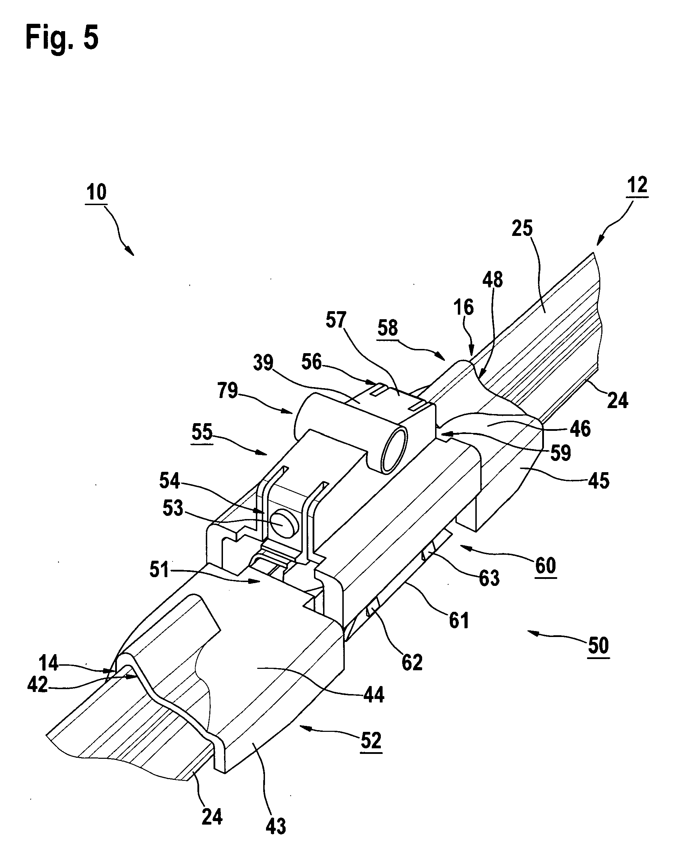

Gemäß einer Ausführungsform ist das Verbindungselement 55 an den Rastgliedern 51, 59 befestigbar, vorzugsweise verrastbar. Hierzu sind an dem Verbindungselement 55 zwei den Rastgliedern 51, 59 zugewandte Gegenrastglieder 54 bzw. 56 vorgesehen, die mit den Rastgliedern 51 bzw. 59 verrastbar sind, wie unten bei Fig. 5 beschrieben. Das Verbindungselement 55 weist bevorzugt ein Lagerelement 79 auf, an dem das dem Wischarm 18 von Fig. 1 zugeordnete Anschlussglied 90 von Fig. 1 lagerbar ist.

Fig. 3 zeigt den Ausschnitt der Wischleiste 12 mit der Basisanschlussvorrichtung 60 von Fig. 2 bei der Montage der Adapterhalter 52, 58. Diese werden hierbei mit ihren Unterseiten 34 bzw. 36 in Richtung von Pfeilen 97 bzw. 98 auf die Wischleiste 12 und axiale Endbereiche der Basisanschlussvorrichtung 60 aufgedrückt und dort fest verankert, wie nachfolgend beschrieben.

Gemäß einer Ausführungsform weist der Adapterhalter 52 ein zu seiner Unterseite 34 hin offenes Gehäuse 43 mit Seitenwänden 31, 32 auf. Das Gehäuse 43 umfasst beispielhaft einen ersten Gehäuseabschnitt 81, der durch ein Wandelement 82 von einem zweiten Gehäuseabschnitt 83 getrennt ist. An dem ersten Gehäuseabschnitt 81 ist die Längsnut 42 vorgesehen, die sich vorzugsweise bis zum Wandelement 82 erstreckt. Der zweite Gehäuseabschnitt 83 ist etwa U-förmig geformt und hat eine Abgrenzung 73, die am Vorsprung 41 eine Öffnung 72 ausbildet. Die Öffnung 72 und der Vorsprung 41 bilden beispielhaft das Rastglied 51 aus. Im Bereich des zweiten Gehäuseabschnitts 83 sind an den Seitenwänden 31, 32 bevorzugt Rastzungen 85 bzw. 84 ausgebildet.

Bei der Befestigung des Adapterhalters 52 an der Wischleiste 12 und der Basisanschlussvorrichtung 60 wird der Endbereich 14 des Spoilers 25 derart in der Längsnut 42 angeordnet, dass die Abgrenzung 73 das erste Fixierglied 74 umfasst. Durch einen in Richtung des Pfeils 97 auf den derart positionierten Adapterhalter 52 ausgeübten Druck wird dieser nun relativ zur Basisanschlussvorrichtung 60 bewegt, sodass die Rastzunge 84 unter die Schulter 64 greift und die Rastzunge 85 unter eine entsprechende Schulter an der Anschlussschiene 68 greift. Hierbei wird der Adapterhalter 52 dauerhaft an der Basisanschlussvorrichtung 60 verrastet.

Der Adapterhalter 58 ist bevorzugt spiegelsymmetrisch zum Adapterhalter 52 ausgebildet und weist ein zu seiner Unterseite 36 hin offenes Gehäuse 45 mit Seitenwänden 37, 35 auf. Das Gehäuse 45 umfasst beispielhaft einen ersten Gehäuseabschnitt 91, der durch ein Wandelement 92 von einem zweiten Gehäuseabschnitt 93 getrennt ist. An dem ersten Gehäuseabschnitt 91 ist die Längsnut 48 vorgesehen, die sich vorzugsweise bis zum Wandelement 92 erstreckt. Der zweite Gehäuseabschnitt 93 ist etwa U-förmig geformt und hat eine Abgrenzung 76, die am Vorsprung 49 eine Öffnung 77 ausbildet. Die Öffnung 77 und der Vorsprung 49 bilden beispielhaft das Rastglied 59 aus. Im Bereich des zweiten Gehäuseabschnitts 93 sind an den Seitenwänden 37, 35 bevorzugt Rastzungen 95 bzw. 94 ausgebildet.

Bei der Befestigung des Adapterhalters 58 an der Wischleiste 12 und der Basisanschlussvorrichtung 60 wird der Endbereich 16 des Spoilers 25 derart in der Längsnut 48 angeordnet, dass die Abgrenzung 76 das zweite Fixierglied 75 umfasst. Durch einen in Richtung des Pfeils 98 auf den derart positionierten Adapterhalter 58 ausgeübten Druck wird dieser nun relativ zur Basisanschlussvorrichtung 60 bewegt, sodass die Rastzunge 94 unter die Schulter 65 greift und die Rastzunge 95 unter eine entsprechende Schulter an der Anschlussschiene 68 greift. Hierbei wird der Adapterhalter 58 dauerhaft an der Basisanschlussvorrichtung 60 verrastet.

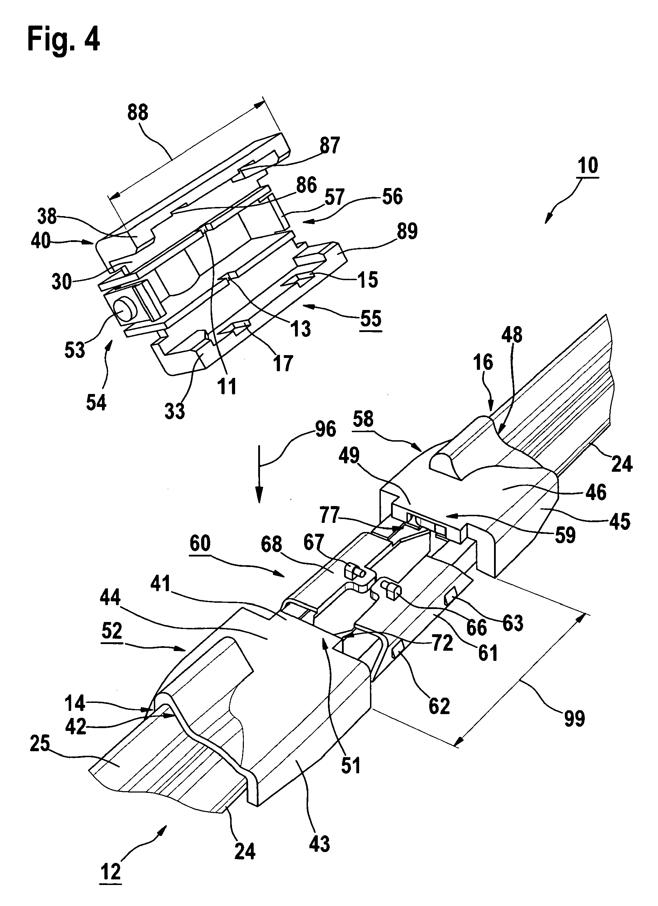

Fig. 4 zeigt den Ausschnitt der Wischleiste 12 mit der Basisanschlussvorrichtung 60 und den dauerhaft daran verrasteten Adapterhaltern 52, 58 von Fig. 2 bei der Montage des Verbindungselements 55 von Fig. 2. Dieses dient zur Verbindung mit dem Wischarm 18 von Fig. 1 bzw. dem daran befestigten Anschlussglied 90 und wird bei der Montage mit seiner Unterseite 30 in Richtung eines Pfeil 96 auf der Wischleiste 12 in einem etwa zentralen Bereich der Basisanschlussvorrichtung 60 positioniert. Dort wird es an den einander zugewandten Rastgliedern 51, 59 der Adapterhalter 52 bzw. 58 verrastet, vorzugsweise lösbar, wie nachfolgend beschrieben.

Gemäß einer Ausführungsform weist das Verbindungselement 55 ein zur Unterseite 30 hin offenes Gehäuse 40 mit Seitenwänden 33, 38 auf. An axialen Enden des Gehäuses 40 sind die Gegenrastglieder 54, 56 ausgebildet. Diese weisen beispielhaft federnde Rastzungen 53 bzw. 57 auf. Etwa zentral an der Unterseite 30 des Gehäuses 40 sind Justierglieder 11, 13 vorgesehen. An der Seitenwand 33 sind Führungsnuten 15, 17 ausgebildet und an der Seitenwand 38 sind Führungsnuten 86, 87 vorgesehen.

Das Verbindungselement 55 weist bevorzugt eine Längserstreckung 88 auf, die im Wesentlichen einem in axialer Richtung der Wischleiste 12 zwischen dem ersten und zweiten Adapterhalter 52, 58 vorgesehenen Abstand 99 entspricht. Dies ermöglicht eine formschlüssige Verbindung des Verbindungselements 55 mit den Adapterhaltern 52, 58.

Bei der Befestigung des Verbindungselements 55 an den Adapterhaltern 52, 58 wird dieses bevorzugt mit seiner Unterseite 30 in Richtung des Pfeils 96 auf den zentralen Bereich der Basisanschlussvorrichtung 60 aufgeschoben. Hierbei greifen die an der Anschlussschiene 61 vorgesehenen Positionierglieder 62, 63 zur Führung des Verbindungselements 55 in die Führungsnuten 86 bzw. 87 ein. Analog hierzu greifen an der Anschlussschiene 68 vorgesehene Positionierglieder in die Führungsnuten 15, 17 ein. Die Positionierglieder 66, 67 greifen in die Justierglieder 11 bzw. 13 ein.

Fig. 5 zeigt das wie bei Fig. 4 beschrieben an der Wischleiste 12 mit der Basisanschlussvorrichtung 60 und den dauerhaft daran verrasteten Adapterhaltern 52, 58 positionierte Verbindungselement 55. Gemäß einer Ausführungsform sind die an dem Verbindungselement 55 vorgesehenen, federnden Rastzungen 53, 57 betätigbar, vorzugsweise in axialer Richtung der Wischleiste 12 bzw. des Verbindungselements 55 zusammendrückbar. Somit ist es möglich, das Verbindungselement 55 derart zwischen die Adapterhalter 52, 58 zu schieben, dass die Rastzungen 53, 57 unter die Vorsprünge 41 bzw. 49 greifen und an diesen verrasten können. Analog hierzu ist ein Lösen dieser Verrastung durch eine Betätigung der Rastzungen 53, 57 und ein Abziehen bzw. Entfernen des Verbindungselements 55 ebenfalls möglich.

## Patentansprüche

1. Wischblatt (10) für einen Scheibenwischer, mit einer Wischleiste (12) und einer Adaptereinheit (50) zur Befestigung der Wischleiste (12) an einem Wischarm (18), wobei die Adaptereinheit (50) an einer an der Wischleiste (12) vorgesehenen Basisanschlussvorrichtung (60) befestigt ist, die in einer Unterbrechung eines an der Wischleiste (12) vorgesehenen Spoilers (25) zwischen einem ersten, der Basisanschlussvorrichtung (60) zugewandten Endbereich (14) und einem zweiten, der Basisanschlussvorrichtung (60) zugewandten Endbereich (16) des Spoilers (25) angeordnet ist, **dadurch gekennzeichnet, dass** die Adaptereinheit (50) einen ersten Adapterhalter (52) und einen zweiten Adapterhalter (58) aufweist, die voneinander beabstandet an der Basisanschlussvorrichtung (60) befestigt sind und einander zugewandte Rastglieder (51, 59) aufweisen, an denen ein der Adaptereinheit (50) zugeordnetes Verbindungselement (55) zur Verbindung mit dem Wischarm (18) verrastet ist.

2. Wischblatt nach Anspruch 1, **dadurch gekennzeichnet, dass** der erste und zweite Adapterhalter (52, 58) dauerhaft an der Basisanschlussvorrichtung (60) verrastet sind, und das Verbindungselement (55) lösbar an dem ersten und zweiten Adapterhalter (52, 58) verrastet ist.

3. Wischblatt nach Anspruch 1 oder 2, **dadurch gekennzeichnet, dass** das Verbindungselement (55) Gegenrastglieder (54, 56) aufweist, die mit den Rastgliedern (51, 59) der Adapterhalter (52, 58) verrastet sind.

4. Wischblatt nach Anspruch 3, **dadurch gekennzeichnet, dass** die Gegenrastglieder (54, 56) betätigbar sind, um ein Lösen einer zwischen Gegenrastgliedern (54, 56) und Rastgliedern (51, 59) vorliegenden Verrastung zu ermöglichen.

5. Wischblatt nach Anspruch 3 oder 4, **dadurch gekennzeichnet, dass** die Rastglieder (51, 59) dem Verbindungselement (55) zugewandte Vorsprünge (41, 49) aufweisen, und die Gegenrastglieder (54, 56) federnde Rastzungen (53, 57) aufweisen, die an den Vorsprüngen (41, 49) verrastet sind.

6. Wischblatt nach einem der vorhergehenden Ansprüche, **dadurch gekennzeichnet, dass** in axialer Richtung der Wischleiste (12) zwischen dem ersten und zweiten Adapterhalter (52, 58) ein Abstand (99) vorgesehen ist, der im Wesentlichen einer Längserstreckung (88) des Verbindungselements (55) entspricht.

7. Wischblatt nach einem der vorhergehenden Ansprüche, **dadurch gekennzeichnet, dass** der erste und zweite Adapterhalter (52, 58) zumindest abschnittsweise eine Längsnut (42, 48) zur Aufnahme der der Basisanschlussvorrichtung (60) zugewandten Endbereiche (14, 16) des an der Wischleiste (12) vorgesehenen Spoilers (25) aufweisen.

8. Wischblatt nach einem der vorhergehenden Ansprüche, **dadurch gekennzeichnet, dass** das Verbindungselement (55) ein Lagerelement (79) aufweist, an dem ein dem Wischarm (18) zugeordnetes Anschlussglied (90) lagerbar ist.

9. Wischblatt nach einem der vorhergehenden Ansprüche, **dadurch gekennzeichnet, dass** die Wischleiste (12) mit der daran vorgesehenen Basisanschlussvorrichtung (60) gelenkfrei ausgebildet ist, wobei die Basisanschlussvorrichtung (60) an der Wischleiste (12) vormontiert ist.

10. Adaptereinheit (50) zur Befestigung einer einem Wischblatt (10) für einen Scheibenwischer zugeordneten Wischleiste (12) an einem Wischarm (18), wobei die Adaptereinheit (50) an einer an der Wischleiste (12) vorgesehenen Basisanschlussvorrichtung (60) befestigbar ist, die in einer Unterbrechung eines an der Wischleiste (12) vorgesehenen Spoilers (25) zwischen einem ersten, der Basisanschlussvorrichtung (60) zugewandten Endbereich (14) und einem zweiten, der Basisanschlussvorrichtung (60) zugewandten Endbereich (16) des Spoilers (25) angeordnet ist, **dadurch gekennzeichnet, dass** ein erster Adapterhalter (52) und ein zweiter Adapterhalter (58) vorgesehen sind, die voneinander beabstandet an der Basisanschlussvorrichtung (60) befestigbar sind und Rastglieder (51, 59) aufweisen, an denen ein zwischen dem ersten und zweiten Adapterhalter (52, 58) montierbares Verbindungselement (55) zur Verbindung mit dem Wischarm (18) verrastbar ist.

## Claims

1. Wiper blade (10) for a windscreen wiper, having a wiper strip (12) and an adapter unit (50) for attaching the wiper strip (12) to a wiper arm (18), wherein the adapter unit (50) is attached to a basic connecting device (60), which is provided on the wiper strip (12) and is arranged in an interruption in a spoiler (25), which is provided on the wiper strip (12), between a first end region (14) of the spoiler (25), which end region faces the basic connecting device (60), and a second end region (16) of the spoiler (25), which end region faces the basic connecting device (60), **characterized in that** the adapter unit (50) has a first adapter holder (52) and a second adapter holder (58), which adapter holders are attached, spaced apart from each other, to the basic connecting device (60) and have mutually facing latching members (51, 59) to which a connecting element (55), which is assigned to the adapter unit (50) and is intended for connection to the wiper arm (18), is latched.

2. Wiper blade according to Claim 1, **characterized in that** the first and second adapter holders (52, 58) are latched permanently to the basic connecting device (60), and the connecting element (55) is latched releasably to the first and second adapter holders (52, 58).

3. Wiper blade according to Claim 1 or 2, **characterized in that** the connecting element (55) has counter-latching members (54, 56) which are latched to the latching members (51, 59) of the adapter holders (52, 58).

4. Wiper blade according to Claim 3, **characterized in that** the counter-latching members (54, 56) are actuable in order to enable a latching connection present between counter-latching members (54, 56) and latching members (51, 59) to be released.

5. Wiper blade according to Claim 3 or 4, **characterized in that** the latching members (51, 59) have projections (41, 49) facing the connecting element (55), and the counter-latching members (54, 56) have resilient latching tongues (53, 57) which are latched to the projections (41, 49).

6. Wiper blade according to one of the preceding claims, **characterized in that** a spacing (99) which substantially corresponds to a longitudinal extent (88) of the connecting element (55) is provided in the axial direction of the wiper strip (12) between the first and second adapter holders (52, 58).

7. Wiper blade according to one of the preceding claims, **characterized in that** at least sections of the first and second adapter holders (52, 58) have a longitudinal groove (42, 48) for receiving the end regions (14, 16), which face the basic connecting device (60), of the spoiler (25) provided on the wiper strip (12).

8. Wiper blade according to one of the preceding claims, **characterized in that** the connecting element (55) has a bearing element (79) on which a connecting member (90) assigned to the wiper arm (18) can be mounted.

9. Wiper blade according to one of the preceding claims, **characterized in that** the wiper strip (12) is formed in a joint-free manner with the basic connecting device (60) provided thereon, wherein the basic connecting device (60) is prefitted to the wiper strip (12).

10. Adapter unit (50) for attaching a wiper strip (12), which is assigned to a wiper blade (10) for a windscreen wiper, to a wiper arm (18), wherein the adapter unit (50) is fastenable to a basic connecting device (60), which is provided on the wiper strip (12) and is arranged in an interruption in a spoiler (25), which is provided on the wiper strip (12), between a first end region (14) of the spoiler (25), which end region faces the basic connecting device (60), and a second end region (16) of the spoiler (25), which end region faces the basic connecting device (60), **characterized in that** a first adapter holder (52) and a second adapter holder (58) are provided, said adapter holder being fastenable, spaced apart from each other, to the basic connecting device (60) and having latching members (51, 59) to which a connecting element (55), which is fittable between the first and second adapter holders (52, 58) and is intended for connection to the wiper arm (18), can be latched.

## Revendications

1. Balai d'essuie-glace (10) pour un essuie-glace, comprenant une raclette de balai d'essuie-glace (12) et une unité d'adaptateur (50) pour la fixation de la raclette de balai d'essuie-glace (12) sur un bras d'essuie-glace (18), l'unité d'adaptateur (50) étant fixée à un dispositif de raccordement de base (60) prévu sur la raclette de balai d'essuie-glace (12), lequel dispositif de raccordement de base est disposé au niveau d'une interruption d'un déflecteur (25) prévu sur la raclette de balai d'essuie-glace (12) entre une première région d'extrémité (14) tournée vers le dispositif de raccordement de base (60) et une deuxième région d'extrémité (16) du déflecteur (25) tournée vers le dispositif de raccordement de base (60), **caractérisé en ce que** l'unité d'adaptateur (50) présente un premier dispositif de retenue d'adaptateur (52) et un deuxième dispositif de retenue d'adaptateur (58), lesquels sont fixés de manière espacée l'un de l'autre au dispositif de raccordement de base (60) et présentent des organes d'encliquetage (51, 59) tournés l'un vers l'autre, au niveau desquels un élément de liaison (55) associé à l'unité d'adaptateur (50) est encliqueté en vue de la liaison avec le bras d'essuie-glace (18).

2. Balai d'essuie-glace selon la revendication 1, **caractérisé en ce que** le premier et le deuxième dispositif de retenue d'adaptateur (52, 58) sont encliquetés de manière durable au dispositif de raccordement de base (60), et l'élément de liaison (55) est encliqueté de manière détachable au premier et au deuxième dispositif de retenue d'adaptateur (52, 58).

3. Balai d'essuie-glace selon la revendication 1 ou 2, **caractérisé en ce que** l'élément de liaison (55) présente des organes d'encliquetage conjugués (54, 56) qui sont encliquetés avec les organes d'encliquetage (51, 59) des dispositifs de retenue d'adaptateur (52, 58).

4. Balai d'essuie-glace selon la revendication 3, **caractérisé en ce que** les organes d'encliquetage conjugués (54, 56) peuvent être actionnés afin de permettre un desserrage d'un encliquetage réalisé entre les organes d'encliquetage conjugués (54, 56) et les organes d'encliquetage (51, 59).

5. Balai d'essuie-glace selon la revendication 3 ou 4, **caractérisé en ce que** les organes d'encliquetage (51, 59) présentent des saillies (41, 49) tournées vers l'élément de liaison (55), et les organes d'encliquetage conjugués (54, 56) présentent des langues d'encliquetage élastiques (53, 57), lesquelles sont encliquetées avec les saillies (41, 49).

6. Balai d'essuie-glace selon l'une quelconque des revendications précédentes, **caractérisé en ce qu'**un espacement (99) est prévu dans la direction axiale de la raclette de balai d'essuie-glace (12) entre le premier et le deuxième dispositif de retenue d'adaptateur (52, 58), lequel espacement correspond essentiellement à une étendue longitudinale (88) de l'élément de liaison (55).

7. Balai d'essuie-glace selon l'une quelconque des revendications précédentes, **caractérisé en ce que** le premier et le deuxième dispositif de retenue d'adaptateur (52, 58) présentent au moins en partie une rainure longitudinale (42, 48) pour recevoir les régions d'extrémité (14, 16) tournées vers le dispositif de raccordement de base (60) du déflecteur (25) prévu sur la raclette de balai d'essuie-glace (12).

8. Balai d'essuie-glace selon l'une quelconque des revendications précédentes, **caractérisé en ce que** l'élément de liaison (55) présente un élément de palier (79), au niveau duquel peut être supporté un organe de raccordement (90) associé au bras d'essuie-glace (18).

9. Balai d'essuie-glace selon l'une quelconque des revendications précédentes, **caractérisé en ce que** la raclette de balai d'essuie-glace (12) est réalisée sans articulation avec le dispositif de raccordement de base (60) prévu sur celle-ci, le dispositif de raccordement de base (60) étant prémonté sur la raclette de balai d'essuie-glace (12).

10. Unité d'adaptateur (50) pour la fixation sur un bras d'essuie-glace (18) d'une raclette de balai d'essuie-glace (12) associée à un balai d'essuie-glace (10) pour un essuie-glace, l'unité d'adaptateur (50) pouvant être fixée à un dispositif de raccordement de base (60) prévu sur la raclette de balai d'essuie-glace (12), lequel dispositif de raccordement de base est disposé au niveau d'une interruption d'un déflecteur (25) prévu sur la raclette de balai d'essuie-glace (12) entre une première région d'extrémité (14) tournée vers le dispositif de raccordement de base (60) et une deuxième région d'extrémité (16) du déflecteur (25) tournée vers le dispositif de raccordement de base (60), **caractérisée en ce qu'**un premier dispositif de retenue d'adaptateur (52) et un deuxième dispositif de retenue d'adaptateur (58) sont prévus, lesquels peuvent être fixés de manière espacée l'un de l'autre au dispositif de raccordement de base (60) et présentent des organes d'encliquetage (51, 59), au niveau desquels peut être encliqueté un élément de liaison (55) pouvant être monté entre le premier et le deuxième dispositif de retenue d'adaptateur (52, 58) en vue de la liaison avec le bras d'essuie-glace (18).
